# EUROPEAN PATENT SPECIFICATION

(11) **EP 3 973 833 B1**
(45) Date of publication and mention of the grant of the patent: **04.12.2024**
(21) Application number: 20198974.6
(22) Date of filing: 29.09.2020
(51) Int. Cl.: A47J 43/046, A47J 43/07

(54) **CONNECTOR ASSEMBLY FOR A KITCHEN MACHINE AND KITCHEN MACHINE WITH CONNECTOR ASSEMBLY**
VERBINDERANORDNUNG FÜR EINE KÜCHENMASCHINE UND KÜCHENMASCHINE MIT EINER VERBINDERANORDNUNG
ENSEMBLE CONNECTEUR POUR UNE MACHINE DE CUISINE ET MACHINE DE CUISINE COMPORTANT L'ENSEMBLE CONNECTEUR

(43) Date of publication of application: 30.03.2022
(73) Proprietor: BSH Hausgeräte GmbH, 81739 München (DE)
(72) Inventor: Decman, Igor, 3232 Ponikva (SI); Golavsek, Samo, 3312 Prebold (SI); Hribersek, Anton, 3330 Mozirje (SI)

(56) References cited:
- EP-A1- 1 045 658
- EP-A1- 2 275 013
- WO-A1-2019/006408
- US-A- 3 786 999
- US-A1- 2019 000 275
- US-B2- 9 775 467

## Description

The present invention concerns a connector assembly for connecting a jug unit of a kitchen machine with a motor base of the kitchen machine. The invention further concerns a kitchen machine with a jug unit, a motor base and a connector assembly.

Kitchen machines typically comprise a jug unit configured to receive food which is to be processed, and a motor base configured to drive a respective tool for processing the food. To facilitate cleaning and/or exchanging the tool, the jug unit and the motor base may be separable from each other. To this end, the kitchen machine may further comprise a connector assembly configured to be arranged between the jug unit and the motor base. Such connector assembly thus connects the jug unit with the motor base. It may include a base surface of the jug unit, and it may comprise a tool holder configured to mount the tool.

US 3 786 999 A discloses a safety mechanism to insure that a blender jar is properly mounted over the high speed comminuting blades of a blender to prevent exposure of the blades when they are revolving. The jar must be inserted on a base member properly and twisted to a locked position to enable the base, which has a portion of the driven blade shaft in it, to be connected to the drive shaft of the blender.

It is an object of the present invention to provide an improved connector assembly and an improved kitchen machine.

The object is achieved with a connector assembly according to claim 1 and with a kitchen machine according to claim 7.

Preferred embodiments are disclosed in the dependent claims, in the description and in the figures.

A connector assembly according to the present invention serves for connecting a jug unit of a kitchen machine with a motor base thereof.

The connector assembly comprises a safety element, at least one elastic element and a housing with first and second connection means. The first connection means serves to detachably fix the connector assembly to the jug unit. The second connector means serves to detachably couple the connector assembly to the motor base (thus, to mount it thereon).

Preferably, the connector assembly is configured to be arranged between the motor base and the jug unit, which in a designated orientation of utilisation of the kitchen machine may be stacked.

The safety element of a connector assembly according to the present invention is movable with respect to the housing. In a first position relative to the housing, the safety element blocks the second connection means and unblocks (i.e., releases) the first connection means. The blocking thus inhibits coupling of the connector assembly to the motor base. In a second position relative to the housing, the safety element unblocks (releases) both the first and the second connection means, and the at least one elastic element urges the safety element towards its first position.

Therein, in its first position relative to the housing, the safety element is arranged so as to be transferred (thus, moved) to its second position relative to the housing by means of the jug unit when the jug unit is being fixed to the connector assembly. That is, combining the jug unit with the connector assembly entails that the safety element is moved from its first position relative to the housing to its second position relative to the housing, in which the connector assembly is enabled to be coupled to the motor base. In the following, to improve readability of the text, the statement "relative to the housing" referring to the respective positions is sometimes omitted.

To realise the transfer from the first to the second position, the safety element may be configured to at least temporarily contact the jug unit and/or an intermediate element (possibly further comprised by the connector assembly) during the fixing (of the jug unit to the connector assembly), and to follow a corresponding fixing movement (of the jug unit relative to the housing) in at least one direction (component) thereof, such as due to friction and/or due to a member (which may be a blocking member configured to engage with the jug unit and to interfere with the first connection means when the safety element is in a third position as detailed below).

For instance, if the fixing movement comprises a screwing, the safety element may be forced to rotate and/or to be linearly shifted (in particular in a direction parallel to a screwing axis). If the fixing movement comprises a linear shift, the safety element may be forced to likewise move linearly and/or to rotate. The housing may comprise a guide system which may be configured to direct the respective movement of the safety element accordingly.

Therefore, unless the safety element is forced (against the at elastic force of the at least one elastic element) away, it takes its first position, in which a fixing of the connector assembly to the motor base is prevented. As long as the connector assembly is devoid of the jug unit, it thus cannot be coupled to the motor base. As a consequence, a user is protected against touching components such as a tool (for processing food) possibly comprised by the connector assembly and configured to be driven by the motor base when the connector assembly is coupled thereto. Therein, the protection is easily and conveniently released by fixing the connector assembly to the jug unit. In particular, the blocking and unblocking of the respective connection means as well as the transfer of the safety element (thus, the protection) may be achieved in a purely mechanical manner.

Moreover, when the safety element is in its second position, further to the second connection means also the first connection means is unblocked. Accordingly, the jug unit may be detached from the connector assembly, which causes the safety element to be forced, by the at least one elastic element, into its first position.

According to preferred embodiments of the present invention, the connector assembly comprises a tool holder configured to mount at least one (possibly exchangeable) tool for processing food. The connector assembly may further comprise at least one such tool. In particular, the tool may comprise a rotation tool such as a rotatable knife assembly.

Preferably, the connector assembly includes a base surface for the jug unit, thus forming a closing bottom of the jug unit. In particular, while the jug unit alone may form a jug wall only (without a ground), the base surface may complete the jug unit so as to form, in combination, a jug configured to receive and hold food. The base surface may be movable with respect to the housing of the connector assembly. For instance, the base surface may be configured to be pushed relative to the housing by the jug unit when being fixed to the housing.

The connector assembly may preferably include a clutch unit for coupling a (respective) tool of the kitchen machine with a motor of the motor base, in particular with a rotatable shaft thereof. The clutch unit may be movable relative to the housing and/or (in respective embodiments) relative to a possibly comprised tool holder and/or relative to a possibly comprised base surface for the jug unit. In particular, the respective movement/s may be possible in a direction of a rotation axis of the clutch.

Preferably, the safety element comprises a ring portion. In respective embodiments comprising a tool holder for a rotation tool, such ring portion may be arranged so as to at least partially surround a rotation axis of the tool. If the first connection means and/or the second connection means comprises a screw thread, the respective screw axis may preferably coincide with a centre axis of the ring portion.

The blocking of the second connection means may be realised, for example, by one or more blocking unit(s) the safety element may comprise, which blocking unit(s) may interfere with and/or obstruct the second connection means when the safety element is in its first position. In embodiments, in which the safety element comprises a ring portion, such blocking unit(s) may protrude from the ring portion in a direction having a (non-zero) component parallel to a centre axis of the ring portion.

According to the present invention, in its second position, the safety element is arranged so as to be transferred to a third position by means of the motor base when the connector assembly is being coupled thereto. In its third position, the safety element may then be urged towards its second position, by the force of gravity (when the connector assembly is in a designated orientation of utilisation) and/or by the elastic force of the at least one elastic element and/or by a further elastic element the connector assembly may comprise, and it may block the first connection means and unblock the second connection means.

The blocking of the first connection means may be realised, for example, by one or more blocking member(s) the safety element may comprise, which blocking member(s) may interfere with and/or obstruct the first connection means when the safety element is in its third position. In embodiments, in which the safety element comprises a ring portion, such blocking member(s) may protrude from the ring portion in a direction having a (non-zero) component parallel to a centre axis of the ring portion.

To realise the transfer from the second to the third position, the safety element may be configured to at least temporarily contact the motor base and/or an intermediate member (possibly further comprised by the connector assembly) during the coupling (of the connector assembly to the motor base), and to follow a corresponding coupling movement (of the motor base relative to the housing) in at least one direction (component) thereof. For instance, if the coupling movement comprises a screwing, the safety element may thus be forced to rotate and/or to be linearly shifted (in particular in a direction parallel to a screwing axis). If the coupling movement comprises a linear shift, the safety element may be forced to likewise move linearly and/or to rotate. The housing may comprise a guiding system which may be configured to direct the respective movement of the safety element accordingly.

Coupling the connector assembly to the motor base thus entails that the safety element is moved from its second position to its third position, in which the safety assembly can be decoupled from the motor base (as the second connection means is unblocked), but in which the jug unit cannot be detached from the connector assembly, as the first connection means is blocked. Therefore, removing the jug unit from the connector assembly being coupled to the motor base is prohibited. In such state, the user thus remains protected against touching components such as a tool (for processing food) possibly comprised by the connector assembly and configured to be driven by the motor base when the connector assembly is coupled thereto. In particular, according to these embodiments, the connector assembly can neither be coupled without the jug unit to the motor base, nor can the jug unit be separated from the connector assembly coupled to the motor base. That is, occurrence of a situation in which the connector assembly is coupled, without the jug unit, to the motor base is precluded. Thus, high safety and nevertheless comfortable and easy handling is achieved.

According to preferred embodiments of the present invention, the second connection means may comprise a bayonet mount component (configured to interact with a respective bayonet mount counter component the motor base may comprise). In such embodiments, if the safety element comprises at least one blocking unit as mentioned above, such blocking unit(s) may be configured to obstruct the bayonet mount component when the safety element is in its first position, thus inhibiting a connection with the respective bayonet mount counter component of the motor base. The transfer of the safety element from its first position to its second position may then preferably comprise a rotation of the safety element with respect to a mounting axis of the bayonet mount component. Thereby, the at least one blocking unit may be moved (i.e., rotated) so as to release the bayonet mount component, thus unblocking the second connection means.

Additionally or alternatively, the second connection means may comprise a screw thread; such screw thread may be a one-start thread or a multiple-start thread, in particular a double-start thread. The screw thread may include at least one slot configured to receive a blocking unit, which may be comprised by the safety element and which may be configured to release the screw thread when the safety element is in its second position, and to block it when the safety element is in its first position. In particular, in such embodiments in which the second connection means comprises a screw thread, the transfer of the safety element from its first position to its second position preferably comprises a shift parallel to a screwing axis of the screw thread.

Similarly, the first connection means may comprise a screw thread; such screw thread may be a one-start thread or a multiple-start thread, in particular a double-start thread. According to particular examples, the fixation of the jug unit to the connector assembly by means of such screw thread may comprise a rotation of at least 240° or at least 260° and/or of at most 290° or at most 280°.

Such screw thread advantageously comprised by the first connection means may include at least one slot configured to receive a (respective) blocking member preferably comprised by the safety element. In respective embodiments, such blocking member may be configured to be inserted into the at least one slot when the safety element is in its third position, and to release the screw thread when the safety element is in its first and its second position. In particular, in embodiments wherein the first connection means comprises a screw thread, the transfer of the safety element from its second position to its third position preferably comprises a shift parallel to a screwing axis of the screw thread.

Additionally or alternatively, the first connection means may comprise a bayonet mount component (configured to interact with a respective bayonet mount counter component the jug unit may comprise). In respective embodiments, the transfer of the safety element from its second position to its third position may then comprise a rotation of the safety element with respect to a mounting axis of the bayonet mount. Thereby, at least one blocking member possibly comprised by the safety element may be moved so as to close a mouth of the bayonet mount, thus blocking the first connection means.

A kitchen machine according to the present invention comprises a jug unit, a motor base and a connector assembly according an embodiment of the present invention, the connector assembly being configured to connect the jug unit with the motor base. The motor base may preferably comprise an electric motor. In particular, the kitchen machine may comprise an electric blender. Advantageously, in a designated state and orientation of utilisation of the kitchen machine, the motor base, the connector assembly and the jug unit may be stacked.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1a:: a motor base and a connector assembly of a kitchen machine according to the present invention;
- Fig. 1b:: a connector assembly according to the present invention and a jug unit fixed thereto;
- Fig. 1c:: a kitchen machine according to the present invention, with the connector assembly and the jug unit shown in Figure 1b mounted on a motor base;
- Fig. 2a:: an insight in a connector assembly according to the present invention fixed to a jug unit and unmounted from a motor base;
- Fig. 2b:: an insight in the connector assembly of Figure 2a when fixed to a jug unit and mounted to a motor base;
- Fig. 3a:: a cross section of a connector assembly according to the present invention detached from jug unit;
- Fig. 3b:: a cross section of the connector assembly of Figure 3a fixed to a jug unit; and
- Fig. 3c:: a cross section of the connector assembly of Figures 3a and 3b fixed to a jug unit and mounted to a motor base.

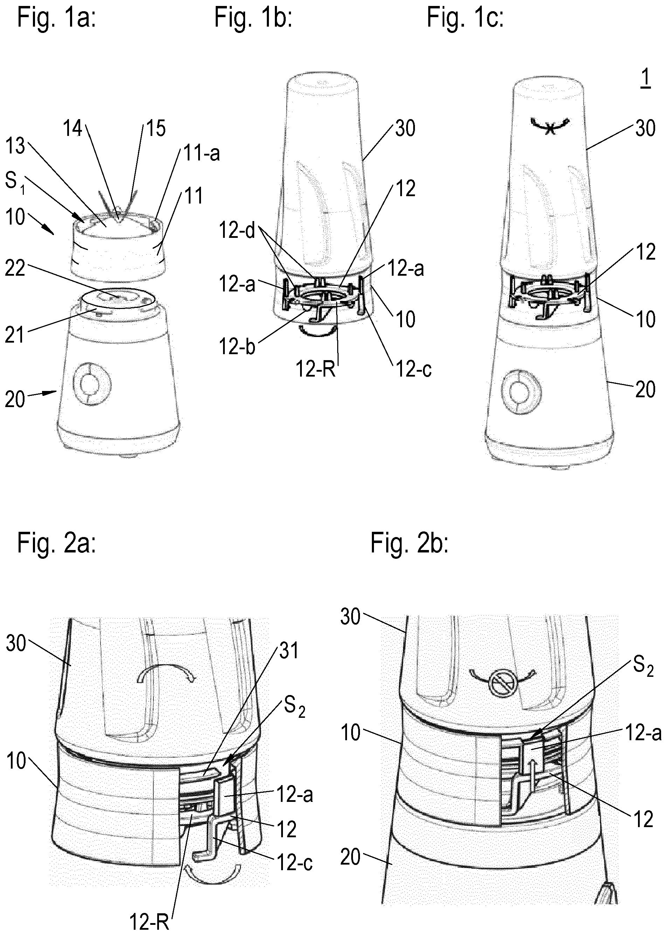

In Figure 1a, a connector assembly 10 and a motor base 20 of a kitchen machine according to the present invention are shown in a perspective view, which kitchen machine in the present exemplary case is an electric blender. The connector assembly 10 comprises a housing 11 including first connection means 11-a for detachably fixing the connector assembly to a jug unit (not shown in Figure 1a). In the exemplary embodiment depicted, the first connection means 11-a comprises a screw thread which is interrupted by slots S₁ extending parallel to a screwing axis of the thread. As detailed below, the slots S₁ serve to receive respective blocking members of a safety element further comprised by the connector assembly (and not shown in Figure 1a) when the safety element is in its third position.

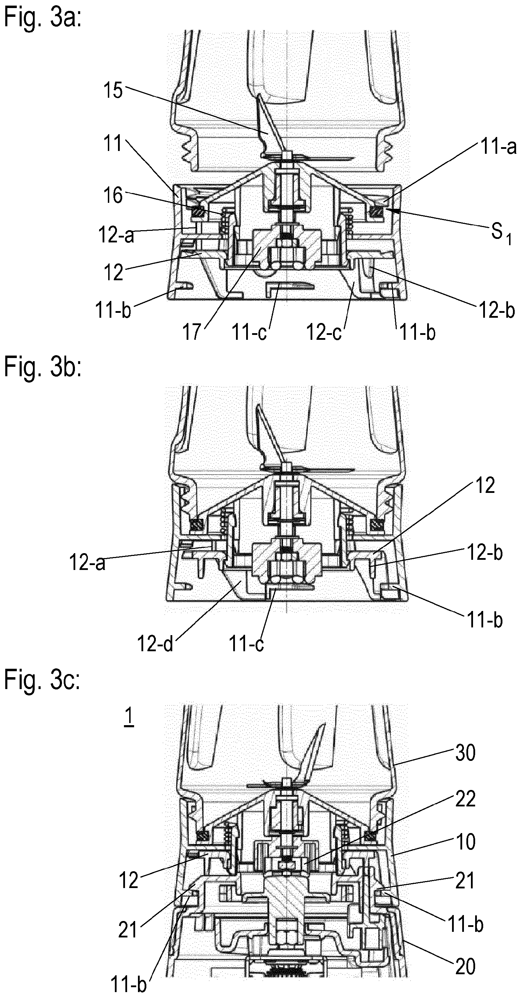

The housing 11 of the connector assembly 10 further comprises second connection means configured to detachably couple the connector assembly 10 with the motor base 20. In the present case, the second connection means is not visible therein Figure 1a, due to the perspective thereof. The second connection means is configured to interact with respective motor base connection means 21 which in this case are embodied as bayonet mount counter components of the motor base 20. In Figures 3a - 3c, the second connection means 11-b is seen to comprise a bayonet mount component.

The connector assembly 10 depicted in Figures 1a, 1b further comprises a base surface 13 for a jug unit to be combined with the connector assembly 10, a tool holder 14 and a rotatable tool 15 which in the present case is a rotatable knife assembly. For driving the rotatable tool, a clutch unit (not visible in Figure 1a) of the connector assembly is to be coupled, by mounting the connector assembly on the motor base, with a clutch element 22 of the motor base. In Figures 3a - 3c, such clutch unit 17 is visible.

Due to the present invention, the mounting (and therewith, coupling) of the connector assembly to the motor base is prevented when the jug is devoid of a jug unit. Thereby, a user is protected from being able to touch a driven tool.

The protection is achieved, according to the present invention, by means of a safety element the connector assembly further comprises, which safety ring is hidden in the perspective of Figure 1a.

In Figure 1b, the connector assembly 10 is shown when fixed to a jug unit 20. Moreover, for explanation, the safety element 12 inside the connector assembly 10 is indicated. In the present case, the safety element 12 comprises a ring portion 12-R, several blocking members 12-a configured to interfere with the first connection means 11-a (comprising a thread) when the safety element is in its third position, and a plurality of blocking units 12-b configured to obstruct respective bayonet mount components when the safety element is in its first position. In the situation shown in Figure 1b, the jug unit 30 is coupled to the connector assembly 10, whereby the safety element 12 included in the connector assembly 10 is transferred from its first position to its second position, in which the first and the second connection means are unblocked (i.e., released).

To transfer the safety element from its first to its second position relative to the housing 11, the safety element 12 may be rotated by the jug unit 30 when the jug unit is screwed in. The rotation may be caused by the jug unit 30 interacting with the blocking members 12-a when the jug unit is sufficiently screwed to the connector assembly 10. Stopper members 12-c of the safety element may serve to delimit the rotation by butting against respective limit stops 11-c in the housing 11 (such limit stops are seen in Figures 3a, 3b). Thereby, precision in the transfer of safety element 12 to the second position may be ensured.

Engaging elements 12-d comprised by the safety element are configured to engage with an elastic element 16 (further comprised by the connector assembly and not visible in Figures 1a - 1c, but referenced in Figure 3a), so as to act thereon against an elastic force of the elastic element 16 when the safety element 12 is rotated by the jug unit. As a consequence, when the jug unit 30 is detached from the connector assembly 10, the safety element 12 is automatically rotated back from its second position to its first position.

In Figure 1c, the connector assembly 10 is seen to be mounted, with the jug unit 30 being fixed thereto, to the motor base 20. Thereby, the safety element is transferred, by the motor base 20, to a third position relative to the housing. In its third position, the safety element 12 blocks the first connection means 11-a. Thereby, it is inhibited that the jug unit 30 can be detached from the connector assembly 10 being mounted on the motor base 20. As a consequence, a user is again protected from being able to touch a driven tool 15.

The connector assembly 10, the motor base 20 and the jug component 30 together form a kitchen machine 1 according to an embodiment of the present invention. In Figure 1c, the kitchen machine 1 is depicted in its designated orientation of utilisation.

In Figures 2a, 2b, details of the protection mechanism according to the present invention are shown by means of an opening in the casing of the connector assembly 10. As is to be understood, the opening allowing the insight in the interior of the connector assembly 10 is for illustration purposes.

In Figure 2a, the connector assembly 10 is shown to be fixed to the jug unit 30. In this situation, the safety element 12 is in its second position, in which the first and the second connection means are unblocked. As a consequence, the connector assembly 10 and the jug unit 20 can be rotated with respect to each other, as indicated by respective arrows, and the connector assembly can be mounted on a motor base (not shown in Figure 2a).

In Figure 2b, the connector assembly 10 is seen to be thus mounted, with the jug unit 30 being fixed thereto, to the motor base 20. As a consequence, the motor base 20 has pushed the safety element towards the first connection means. Thereby, a blocking member 12-a has been shifted, within a slot S₁ (see Figure 1a) in the first connection means, into a slot S₂ arranged in the thread of the jug unit 30. As a consequence, a rotation of the jug unit 30 and the connector assembly 10 relative to each other is inhibited. That is, the first connection means of the connector assembly 10 is blocked, and the safety element 12 is in its third position.

Figures 3a - 3c show details of the present invention in respective cross sections along a screwing axis of the first connection means 11-a (comprising a screw thread), which axis coincides with a rotation axis of a tool 15 comprised by the connector assembly 10.

In the situation shown in Figure 3a, the safety element 12 is in its first position, in which position blocking units 12-b comprised by the safety element 12 obstruct bayonet mount components comprised by the second connection means 11-b.

By contrast, in the situation shown in Figure 3b, the safety element 12 has been rotated, by the jug unit 30 being screwed into the screw thread comprised by the first connection means 11-a, into its second position. As a consequence, the blocking units 12-b release the bayonet mount components comprised by the second connection means 11-b.

In the situation depicted in Figure 3c, the safety element 12 has been shifted, by the motor base 20, into its third position.

Disclosed is a connector assembly 10 for connecting a jug unit 30 with a motor base 20 of a kitchen machine 1. The connector assembly 10 comprises a housing 11, a movable safety element 12 and at least one elastic element 16. In a first position relative to the housing 11, the safety element 12 unblocks first connection means 11-a for fixing the connector assembly to the jug unit, and blocks second connection means 11-b for mounting the connector element to a motor base. In a second position, the safety element 12 unblocks both the first connection means 11-a and the second connection means 11-b. Therein, the safety element 12 can be transferred, against an elastic force of the elastic element 16, from its first to its second position by fixing the jug unit 30 to the connector assembly 10.

Further disclosed is a kitchen machine 1 comprising a connector assembly 10, a motor base 20 and a jug unit 30.

### Reference signs

- 1: kitchen machine

- 10: connector assembly
- 11: housing
- 11-a: first connection means
- 11-b: second connection means
- 11-c: limit stop
- 12: safety element
- 12-a: blocking member
- 12-b: blocking unit
- 12-c: stopper member
- 12-d: engaging element
- 12-R: ring portion
- 13: base surface
- 14: tool holder
- 15: tool
- 16: elastic element
- 17: clutch unit

- 20: motor base
- 21: motor base connection means
- 22: clutch element

- 30: jug unit
- 31: jug unit connection means

- S₁: slot in first connection means
- S₂: slot in jug unit connection means

## Claims

1. Connector assembly (10) for connecting a jug unit (30) with a motor base (20) of a kitchen machine (1), the connector assembly (10) comprising
- a housing (11) having first connection means (11-a) for detachably fixing the connector assembly to the jug unit (30), and second connection (11-b) means for detachably coupling the connector assembly (10) to the motor base (20),
- a safety element (12) which is movable relative to the housing (11), and
- at least one elastic element (16),
wherein in a first position, the safety element (12) is arranged so as to be transferred, by the jug unit (30) when the jug unit is being fixed to the connector assembly (10), to a second position, in which an elastic force of the at least one elastic element (16) is configured to urge the safety element (12) towards the first position thereof,
wherein in its first position, the safety element (12) is configured to unblock the first connection means (11-a) and block the second connection means (11-b), and in its second position, the safety element (12) is configured to unblock both the first connection means (11-a) and the second connection means (11-b),**characterized in that** in its second position, the
safety element (12) is arranged so as to be transferred, by the motor base (20) when the connector assembly (10) is being coupled to the motor base, to a third position, in which position force of gravity, the elastic force of the at least one elastic element (16) and/or the elastic force of a further elastic element is configured to ur-gethe safety element (12) towards the second position thereof,
wherein in its third position, the safety element (12) is configured to block the first connection means (11-a) and unblock the second connection means (11-b).

2. Connector assembly (10) according to claim 1, wherein the second
connection means (11-b) comprises a screw thread and/or a bayonet mount component.

3. Connector assembly (10) according to one of the preceding claims, wherein the first connection means (11-a) comprises a screw thread and/or a bayonet mount component.

4. Connector assembly (10) according to one of the preceding claims, further comprising a tool holder (14) configured to mount a tool (15) for processing food and to provide a ground of the jug unit (30) when combined therewith.

5. Connector assembly (10) according to one of the preceding claims, wherein the safety element (12) comprises a ring portion (12-R).

6. Connector assembly (10) according to claim 5, wherein the safety element (12) further comprises one or more blocking unit/s (12-b) protruding from the ring portion (12-R) in a direction having a component parallel to a centre axis of the ring portion (12-R), and configured to interfere with and/or obstruct the second connection means (11-b) when the safety element (12) is in its first position.

7. Kitchen machine (1) comprising a jug unit (30), a motor base (20) and a connector assembly (10) according to one of the preceding claims and configured to connect the jug unit (30) with the motor base (20).

8. Kitchen machine (1) according to claim 7, wherein the kitchen machine comprises an electric blender.

## Patentansprüche

1. Verbinderanordnung (10) zum Verbinden einer Bechereinheit (30) mit einem Motorsockel (20) einer Küchenmaschine (1), wobei die Verbinderanordnung (10) Folgendes umfasst:
- ein Gehäuse (11) mit ersten Verbindungsmitteln (11-a) zum lösbaren Fixieren der Verbinderanordnung an der Bechereinheit (30) und zweiten Verbindungsmitteln (11-b) zum lösbaren Ankoppeln der Verbinderanordnung (10) an den Motorsockel (20),
- ein Sicherheitselement (12), das in Bezug auf das Gehäuse (11) beweglich ist, und
- mindestens ein elastisches Element (16),
wobei das Sicherheitselement (12) in einer ersten Position so angeordnet ist, dass es von der Bechereinheit (30), wenn diese an der Verbinderanordnung (10) fixiert ist, in eine zweite Position überführt wird, in der eine Federkraft des mindestens einen elastischen Elements (16) so ausgelegt ist, dass sie das Sicherheitselement (12) in dessen erste Position drückt,
wobei das Sicherheitselement (12) so ausgelegt ist, dass es in seiner ersten Position das erste Verbindungsmittel (11-a) entsperrt und das zweite Verbindungsmittel (11-b) sperrt und in seiner zweiten Position sowohl das erste Verbindungsmittel (11-a) als auch das zweite Verbindungsmittel (11-b) entsperrt,
**dadurch gekennzeichnet, dass** das Sicherheitselement (12) so angeordnet ist, dass es in seiner zweiten Position, wenn die Verbinderanordnung (10) an den Motorsockel gekoppelt wird, von dem Motorsockel (20) in eine dritte Position überführt wird, in der die Schwerkraft, die Federkraft des mindestens einen elastischen Elements (16) und/oder die Federkraft eines weiteren elastischen Elements so ausgelegt ist, dass sie das Sicherheitselement (12) in seine zweite Position drückt,
wobei das Sicherheitselement (12) so ausgelegt ist, dass es in seiner dritten Position das erste Verbindungsmittel (11-a) sperrt und das zweite Verbindungsmittel (11-b) entsperrt.

2. Verbinderanordnung (10) nach Anspruch 1, wobei das zweite Verbindungsmittel (11-b) ein Schraubgewinde und/oder eine Bajonettverschluss-Komponente umfasst.

3. Verbinderanordnung (10) nach einem der vorhergehenden Ansprüche, wobei das erste Verbindungsmittel (11-a) ein Schraubgewinde und/oder eine Bajonettverschluss-Komponente umfasst.

4. Verbinderanordnung (10) nach einem der vorhergehenden Ansprüche, die ferner eine Werkzeugaufnahme (14) umfasst, die so ausgelegt ist, dass sie ein Werkzeug (15) zum Verarbeiten von Lebensmitteln befestigt und einen Boden für die Bechereinheit (30) bereitstellt, wenn sie damit zusammengesetzt ist.

5. Verbinderanordnung (10) nach einem der vorhergehenden Ansprüche, wobei das Sicherheitselement (12) einen Ringabschnitt (12-R) umfasst.

6. Verbinderanordnung (10) nach Anspruch 5, wobei das Sicherheitselement (12) ferner eine oder mehrere Sperreinheiten (12-b) umfasst, die aus dem Ringabschnitt (12-R) in einer Richtung mit einer Komponente parallel zu einer Mittelachse des Ringabschnitts (12-R) vorstehen und so ausgelegt sind, dass sie das zweite Verbindungsmittel (11-b) behindern und/oder blockieren, wenn sich das Sicherheitselement (12) in seiner ersten Position befindet.

7. Küchenmaschine (1) mit einer Bechereinheit (30), einem Motorsockel und einer Verbinderanordnung (10) nach einem der vorhergehenden Ansprüche, die so ausgelegt ist, dass sie die Bechereinheit (30) mit dem Motorsockel (20) verbindet.

8. Küchenmaschine (1) nach Anspruch 7, wobei die Küchenmaschine einen elektrischen Mixer umfasst.

## Revendications

1. Ensemble connecteur (10) pour connecter une unité de carafe (30) avec un socle de moteur (20) d'un robot de cuisine (1), l'ensemble connecteur (10) comprenant :
- un boîtier (11) comportant un premier moyen de connexion (11-a) pour fixer de manière amovible l'ensemble connecteur à l'unité de carafe (30), et un deuxième moyen de connexion (11-b) pour accoupler de façon amovible l'ensemble connecteur (10) au socle de moteur (20),
- un élément de sécurité (12) qui est mobile par rapport au boîtier (11), et
- au moins un élément élastique (16),
dans lequel, dans une première position, l'élément de sécurité (12) est agencé de façon à être transféré, par l'unité de carafe (30) lorsque l'unité de carafe (30) est en train d'être fixée à l'ensemble connecteur (10), jusqu'à une deuxième position, dans laquelle une force élastique de l'au moins un élément élastique (16) est configurée pour solliciter l'élément de sécurité (12) vers la première position de celui-ci,
dans lequel, dans sa première position, l'élément de sécurité (12) est configuré pour débloquer le premier moyen de connexion (11-a) et bloquer le deuxième moyen de connexion (11-b), et
dans sa deuxième position, l'élément de sécurité (12) est configuré pour débloquer à la fois le premier moyen de connexion (11-a) et le deuxième moyen de connexion (11-b),
**caractérisé en ce que**,
dans sa deuxième position, l'élément de sécurité (12) est agencé de façon à être transféré, par le socle de moteur (20) lorsque l'ensemble connecteur (10) est en train d'être accouplé au socle de moteur, jusqu'à une troisième position, dans laquelle position la force de gravité, la force élastique de l'au moins un élément élastique (16) et/ou la force élastique d'un élément élastique supplémentaire sont configurées pour solliciter l'élément de sécurité (12) vers la deuxième position de celui-ci,
dans lequel, dans sa troisième position, l'élément de sécurité (12) est configuré pour bloquer le premier moyen de connexion (11-a) et débloquer le deuxième moyen de connexion (11-b).

2. Ensemble connecteur (10) selon la revendication 1, dans lequel le deuxième moyen de connexion (11-b) comprend un filetage et/ou un élément de monture à baïonnette.

3. Ensemble connecteur (10) selon l'une des revendications précédentes, dans lequel le premier moyen de connexion (11-a) comprend un filetage et/ou un élément de monture à baïonnette.

4. Ensemble connecteur (10) selon l'une des revendications précédentes, comprenant en outre un porte-outil (14) configuré pour monter un outil (15) de traitement d'aliments et pour fournir une base de l'unité de carafe (30) lorsqu'elle est combinée à celui-ci.

5. Ensemble connecteur (10) selon l'une des revendications précédentes, dans lequel l'élément de sécurité (12) comprend une partie d'anneau (12-R).

6. Ensemble connecteur (10) selon la revendication 5, dans lequel l'élément de sécurité (12) comprend en outre une ou plusieurs unités de blocage (12-b) faisant saillie à partir de la partie d'anneau (12-R) dans une direction ayant une composante parallèle à un axe central de la partie d'anneau (12-R), et configurées pour entraver et/ou bloquer le deuxième moyen de connexion (11-b) lorsque l'élément de sécurité (12) est dans sa première position.

7. Robot de cuisine (1) comprenant une unité de carafe (30), un socle de moteur (20) et un ensemble connecteur (10) selon l'une des revendications précédentes et configuré pour connecter l'unité de carafe (30) au socle de moteur (20).

8. Robot de cuisine (1) selon la revendication 7, dans lequel le robot de cuisine comprend un mixeur électrique.
